(19) **Europäisches Patentamt**
**European Patent Office**
**Office européen des brevets**

(11) **EP 2 217 021 A1**

(12) **EUROPEAN PATENT APPLICATION**
published in accordance with Art. 153(4) EPC

(43) Date of publication:
**11.08.2010 Bulletin 2010/32**

(51) Int Cl.:
*H04W 24/02* (2009.01)   *H04J 1/00* (2006.01)
*H04J 11/00* (2006.01)   *H04W 16/02* (2009.01)
*H04W 52/12* (2009.01)   *H04W 52/18* (2009.01)

(21) Application number: **08843667.0**

(22) Date of filing: **31.10.2008**

(86) International application number:
**PCT/JP2008/069915**

(87) International publication number:
**WO 2009/057760 (07.05.2009 Gazette 2009/19)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(30) Priority: **02.11.2007 JP 2007286739**

(71) Applicant: **NTT DoCoMo, Inc.**
**Chiyoda-ku**
**Tokyo 100-6150 (JP)**

(72) Inventors:
• **KISHIYAMA, Yoshihisa**
  **Tokyo 100-6150 (JP)**
• **OFUJI, Yoshiaki**
  **Tokyo 100-6150 (JP)**
• **SAWAHASHI, Mamoru**
  **Tokyo 100-6150 (JP)**
• **HIGUCHI, Kenichi**
  **Tokyo 100-6150 (JP)**

(74) Representative: **HOFFMANN EITLE**
**Patent- und Rechtsanwälte**
**Arabellastrasse 4**
**81925 München (DE)**

(54) **BASE STATION AND METHOD USED IN MOBILE COMMUNICATION SYSTEM**

(57)     A base station for use in a mobile communication system includes: a measurement unit configured to measure one or more pieces of statistical data in the number of users in a cell, a user distribution state or a traffic amount; and a deriving unit configured to derive a value of a radio parameter corresponding to currently measured statistical data from predetermined correspondence relationship between the statistical data and the radio parameter. A value of the radio parameter set as office data in the base station is automatically updated to a value derived by the deriving unit.

FIG.5

EP 2 217 021 A1

**Description**

TECHNICAL FIELD

The present invention relates to a base station and a method for use in a mobile communication system.

BACKGROUND ART

An Evolved UTRA or Long Term Evolution (LTE) system is currently being discussed by 3GPP, a standardization group for W-CDMA. The LTE system is a successor communication scheme to the wideband code division multiple access (W-CDMA) scheme, the high speed downlink packet access (HSDPA) scheme, and the high speed uplink packet access (HSUPA) scheme and the like. In the LTE system, the orthogonal frequency division multiplexing (OFDM) scheme is to be used for downlink and single-carrier frequency division multiple access (SC-FDMA) scheme is to be used for uplink (see, for example, non-patent document 1).

In both of the downlink and the uplink of the LTE system, one or more resource blocks are assigned to a mobile station (more generally, a user apparatus (user equipment: UE) including mobile station and fixed station) for communications. Resource blocks are shared by multiple mobile stations in the system. In LATE, a base station determines a mobile station, from among a plurality of mobile stations, to which a resource block is to be assigned in each subframe of 1 ms. A subframe may also be called a transmission time interval (TTI). This process is called scheduling. In downlink, the base station transmits a shared channel using one or more resource blocks to the mobile station selected in the scheduling. This shared channel is called a physical downlink shared channel (PDSCH). In uplink, the mobile station selected in the scheduling transmits a shared channel using one or more resource blocks to the base station. This shared channel is called a physical uplink shared channel (PUSCH).

In a communication system employing shared channels, it is necessary to signal (or report) assignment information of the shared channels to user apparatuses for each subframe. A control channel used for this signaling in LTE is called a physical downlink control channel (PDCCH) or a downlink L1/L2 control channel. The physical downlink control channel (PDCCH) includes, for example, downlink scheduling information, acknowledgement information (ACK/NACK), an uplink scheduling grant, and a transmission power control (TPC) command bit, and the like.

When the physical uplink shared channel (PUSCH) is transmitted, the control channel in the uplink is transmitted using resources assigned to the PUSCH. When the physical uplink shared channel (PUSCH) is not transmitted, the control channel in the uplink is transmitted using resources dedicated to the control channel. The former channel includes uplink scheduling information used for PUSCH. The latter is called a physical uplink control channel (punch). The uplink control channel transmits downlink quality information (CQI: Channel Quality Indicator) and acknowledgement information (ACK/NACK) for the physical downlink shared channel, and the like. The CQI is used for scheduling and adaptive modulation and coding (AMC) of the physical downlink shard channel. The acknowledgement information is represented as either positive acknowledgement (ACK) indicating that the transmission signal has been properly received or negative acknowledgement (NACK) indicating that the transmission signal has not been properly received.

By the way, in the present system, a radio parameter such as office data is maintained almost fixedly, and the radio parameter is updated only at timing such as reset of the base station which rarely occurs. Since the radio parameter is fixed unchanged over a long period, it is necessary to set the value of the radio parameter with a sufficiently large margin in preparation for the worst case.

Also, in the LTE system, the radio parameter soch as a ratio of band occupied by the PUCCH in the system band and a target power value in the transmission power control (TPC) is set in the base station as office data. However, the communication states have the property of changing variously. The communication states may change more frequently in the future system in which services are widely diversified, and bandwidth and communication speed are highly increased. It is not preferable to maintain all radio parameters of the office data fixedly similarly to the present system in view of efficiently utilizing radio resources.

[Non-patent document 1] 3GPP TS 36.211(V8.0.0), Sept 2007

DISCLOSURE OF THE INVENTION

PROBLEM TO BE SOLVED BY THE INVENTION

An object of the present invention is to allow the base station to dynamically update the radio parameter in the base station according to communication state.

MEANS FOR SOLVING THE PROBLEM

In the present invention, a base station for use in a mobile communication system is used. The base station includes: a measurement unit configured to measure one or more pieces of statistical data in the number of users in a cell, a user distribution state or a traffic amount; and a deriving unit configured to derive a value of a radio parameter corresponding to currently measured statistical data from predetermined correspondence relationship between the statistical data and the radio parameter. A value of the radio parameter set as office data in the base station is automatically updated to a value derived by the deriving unit.

EFFECT OF THE INTENTION

According to the present invention, the radio parameter of the base station can be automatically updated according to communication states.

BRIEF DESCRIPTION OF THE DRAWINGS

Fig. 1 is a diagram showing a mobile communication system according to an embodiment of the present invention;
Fig. 2 is a diagram showing a base station according to an embodiment of the present invention;
Fig. 3 shows a flowchart of an operation example of an embodiment of the present invention;
Fig. 4 is a diagram showing a table for deriving a resource amount of PUCCH based on a level of a traffic amount;
Fig. 5 is a diagram showing a manner in which the resource amount of the PUCCH is changed according to circumstances;
Fig. 6 is a diagram showing a table for deriving a radio parameter for TPC based the traffic amount and the level of the path loss; and
Fig. 7 is a diagram showing a manner in which the target value for TPC is set to be different according to the value n of the path loss.

DESCRIPTION OF REFERENCE SIGNS

| | |
|---|---|
| 50 | cell |
| $100_1$, $100_2$, $100_3$, $100_n$ | user apparatus |
| 200 | base station |
| 202 | transmitting and receiving antenna |
| 204 | amplifying unit |
| 206 | transmitting and receiving unit |
| 208 | baseband signal processing unit |
| 210 | radio resource control unit |
| 212 | transmission line interface |
| 214 | traffic measurement unit |
| 300 | access gateway apparatus |
| 400 | core network |

PREFERRED EMBODIMENTS FOR CARRYING OUT THE INVENTION

According to an embodiment of the present invention, since the radio parameter is adaptively updated based on statistical data, resource management (for example, management of resource amount of PUCCH, and target value management for TPC) suitable for communication states can be realized. Since the radio parameter can be automatically updated according to communication states, radio resources can be utilized to a larger extent compared to the case where the radio parameter is fixed with excessive margin assuming the worst case.

According to an embodiment of the present invention, the base station further includes a storing unit configured to store a table representing the correspondence relationship.

The correspondence relationship may represent relationship between statistical data that is the number of users and/or the traffic amount and a ratio of a physical uplink control channel (PUCCH) to a system band.

The distribution of users in the cell may be classified based on values of path loss. And, the correspondence relationship may represent relationship between a target power value of transmission power control for user apparatuses and a value of path loss.

The target power value ($T_{SINR}(n)$) may be represented as $T_{STNR}(n) = T_{SINR0}-n \times \Delta T_{SINR}$ [dB], wherein n specifies a classified value of the path loss, and, $T_{SINR0}$ and $\Delta T_{SINR}$ represent radio parameters to be set as office data. The correspondence relationship may represent relationship among $T_{SINR0}$, $T_{SINR}$ and traffic.

Although specific values are used as examples throughout the description to promote an understanding of the present invention, it should be noted that such specific values are just sample values unless otherwise described, and any other values may be used.

[Embodiment 1]

<System>

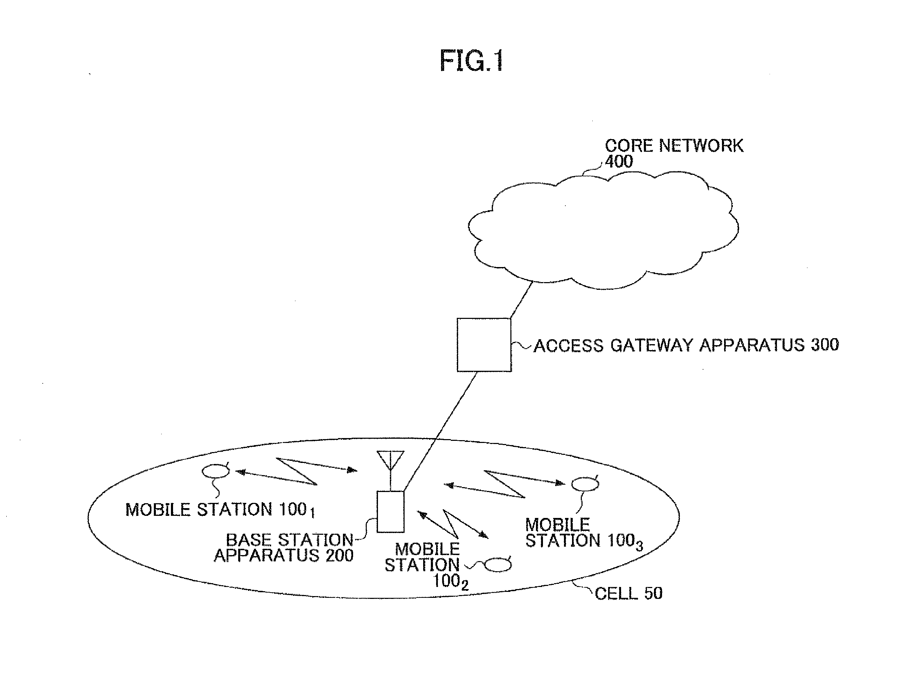

Fig. 1 shows a mobile communication system according to an embodiment of the present invention. The radio communication system 1000 is a system to which the LTE (Evolved UTRA and UTRAN, or Super 3G) is applied, for example. The radio communication system 1000 includes a base station (eNB) 200 and a plurality of mobile stations $100_n$ ($100_1$, $100_2$, $100_3$, $100_n$, n is an integer of n>0). The base station 200 is connected to an upper station, that is, an access gateway apparatus 300, for example, and the access gateway apparatus 300 is connected to a core network 400. The mobile station $100_n$ communicates with the base station 200 by the LTE in a cell 50.

The user apparatuses ($100_1$, $100_2$, $100_3$, ⋯ $100_n$) have the same configurations, functions and states. For the sake of explanation, although the entity that communicates with the base station by radio is the mobile station, the entity may be also referred to as a user apparatus (UE: User Equipment) including a fixed station as well as the mobile station in general.

As radio access schemes, the radio communication system 1000 uses OFDM (orthogonal frequency division multiplexing) in the downlink, and uses SC-FDMA (single carrier - frequency division multiple access) in the uplink. The OFDM is a multicarrier transmission scheme in which a frequency band is divided into a plurality of narrow frequency bands (subcarriers) so that transmission is performed by mapping data on each subcarrier. SC-FDMA is a single carrier transmission scheme that decreases interference among terminals by dividing a frequency band for each terminal and by using different frequency bands with each other by a plurality of terminals.

<Base station>

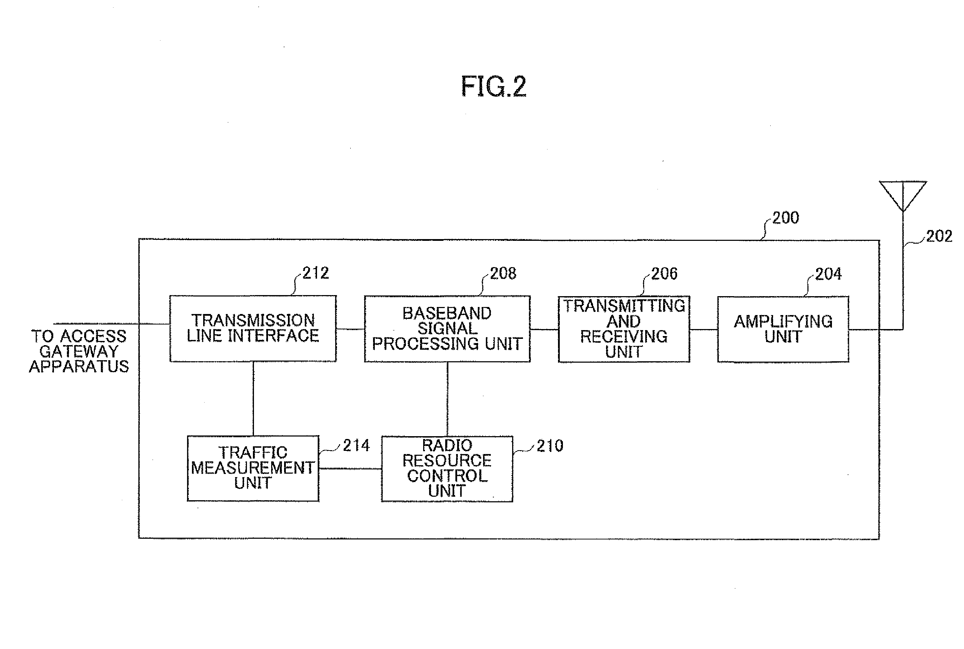

Fig. 2 shows the base station 200 according to an embodiment of the present invention. The base station 200 includes a transmitting and receiving antenna 202, an amplifying unit 204, a transmitting and receiving unit 206, a baseband signal processing unit 208, a radio resource control unit 210, a transmission line interface 212, and a traffic measurement unit 214.

User data transmitted to the mobile station $100_n$ from the base station 200 in the downlink is supplied to the baseband signal processing unit 208 via the transmission line interface 212 from an upper station located in the upper side of the base station 200, that is an access gateway apparatus 300, for example.

The baseband signal processing unit 208 performs dividing and combining of user data, RLC layer transmission processing such as transmission processing of RLC (radio link control) retransmission control, MAC (Medium Access Control) retransmission control such as HARQ retransmission processing, scheduling, transmission format selection, channel coding, Inverse Fast Fourier Transform (IFFT) processing and the like. The processed signal is transferred to the transmitting and receiving unit 206. Also, for the signal of the physical downlink control channel that is the downlink control channel, transmission processing such as channel coding and inverse fast Fourier transform and the like is performed, and the processed signal is transferred to the transmitting and receiving unit 206.

In the transmitting and receiving unit 206, frequency conversion processing is performed such that the baseband signal output from the baseband signal processing unit 208 is converted to a radio frequency band. After that, the signal is amplified by the amplifying unit 204, and is transmitted by the transmitting and receiving antenna 202.

On the other hand, the base station 200 receives data transmitted from the mobile station $100_n$ in the uplink. The radio frequency signal received by the transmitting and receiving antenna 202 is amplified by the amplifying unit 204. Then, the signal is frequenoy-converted to the baseband signal by the transmitting and receiving unit 206, and the converted signal is supplied to the baseband signal processing unit 208.

The baseband signal processing unit 208 performs FFT processing, error correction decoding, reception processing of MAC retransmission control, and reception processing in the RLC layer on the user data included in the supplied baseband signal. The processed signal is transferred to the access gateway apparatus 300 via the transmission line interface 212.

The radio resource control unit 210 performs call processing such as setting and releasing of communication channels, state management of the radio base station 200, and management of radio resources. The radio resource control unit collects time-variable statistical data, and performs control of radio parameters to be set as office data based on the statistical data. For example, the statistical data may be represented as the number of users in a cell, a distribution state of the users in the cell, a traffic amount and the like. Updating operation for the radio parameters is described later.

The traffic measurement unit 214 measures amounts of traffic to be transmitted to the mobile station and/or traffic received from the mobile station.

<Operation example>

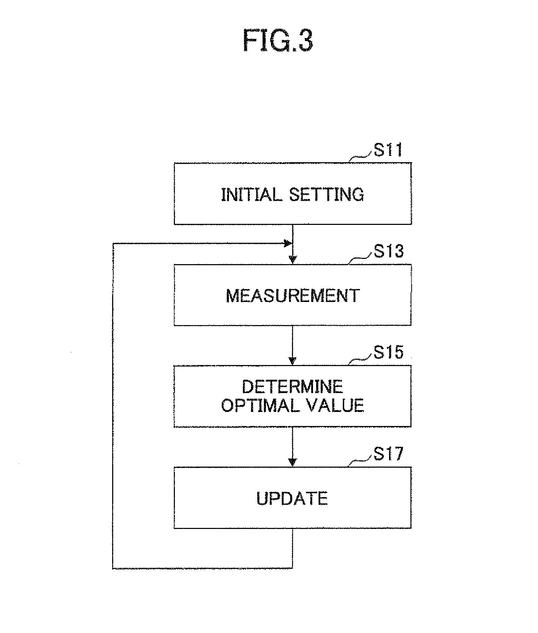

Fig. 3 shows a flowchart of an operation example of an embodiment of the present invention.

In step S11, office data is initially set in the base station. Although there are various types of office data, the resource amount of PUCCH (ratio of PUCCH to the system band) and the target power value in the transmission power control (TPC) are described on behalf of the various types of office data for the sake of ease of explanation. The present invention may be applied to various radio parameters.

In step S13, various pieces of statistical data are measured. The statistical data is an amount that changes over time while the system is operating, and the statistical data may be the number of users in the cell, a distribution state of users in the cell, a traffic amount of communication by each user, a traffic amount of communication of the whole system, and the like. Bust, the statistical data is not limited to these. The distribution state of the users in the cell may be directly obtained from position coordinates of the user, or may be obtained indirectly as an amount such as path loss that reflects shadowing and/or distance attenuation. In the present embodiment, the distribution state of users in the cell is estimated by the value of the path loss.

In step S15, an optimal value of the radio parameter at the time is derived from the collected statistical data. Any proper derivation method can be used. For example, the optimal value of the radio parameter may be derived based on an equation from the statistical data, or may be derived by referring to a list table, or may be derived by referring to the list table in addition to calculation of the equation.

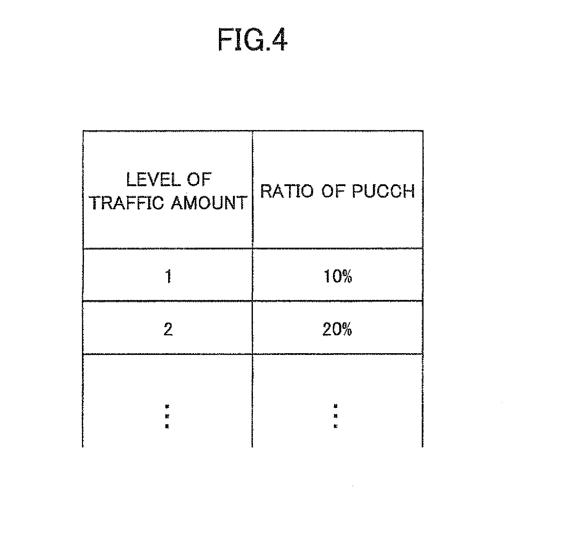

Fig. 4 shows an example of a list table for deriving the resource amount of the PUCCH based on a current level of the traffic amount. The "lever of traffic amount" indicates the level of the traffic amount of uplink or downlink in communication of the whole system. In general, the level of the traffic amount may be associated with the number of users. In the example shown in the figure, the larger the value of the level, the larger the traffic amount is. The "radio of PUCCH" indicates how much the band of PUCCH occupies width respect to the whole of the system band. For example, when the system band is 10 MHz and the level of the traffic amount is 2, 20% of the system band (corresponding to a bandwidth of 2 MHz) is used for PUCCH.

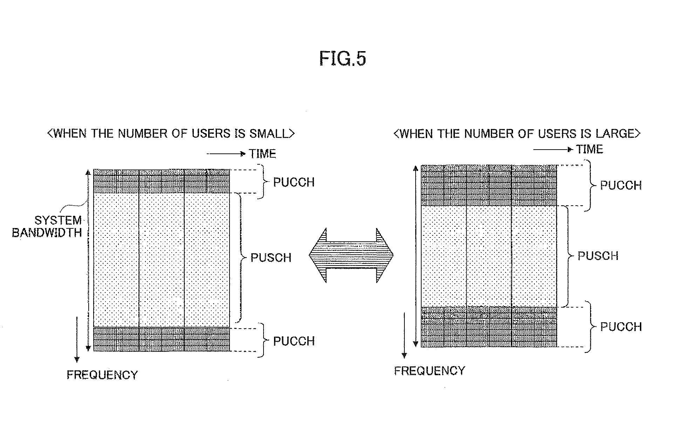

Fig. 5 shows a manner in which the resource amount of the PUCCH is changed according to the level of the traffic amount (or according to the number of users). The left side of the figure corresponds to a case where the level of the traffic amount is 1 (a case where the number of users is small), which corresponds to a case where 10% of the system band is assigned to the PUCCH, for example. The right side corresponds to a case where the level of the traffic amount is 2 (a case where the number of users is large), which corresponds to a case where 20% of the system band is assigned to the PUCCH.

In step S17 in Fig. 3, the radio parameter is updated with the value derived in step S15. After that, the operation flow returns to step S13, and the described processing is repeated. The frequency of update may be set to be any proper frequency. For example, the update may be performed once every other day, once every other week, once during daytime and once during night, for example. For example, the statistical data may be collected during morning of a day, so that the radio parameter of morning of the next day may be updated based on the statistical data. In this case, it is desirable that the statistical data is collected during afternoon of a data, and that the radio parameter of afternoon of the next day is updated based on the statistical data.

According to an embodiment of the present invention, only the amount of resources suitable for the number of users at the time of measurement can be assigned to PUCCH, so that it can be avoided that resources for PUSH are set to be excessively small in consideration for the worst case.

[Embodiment 2]

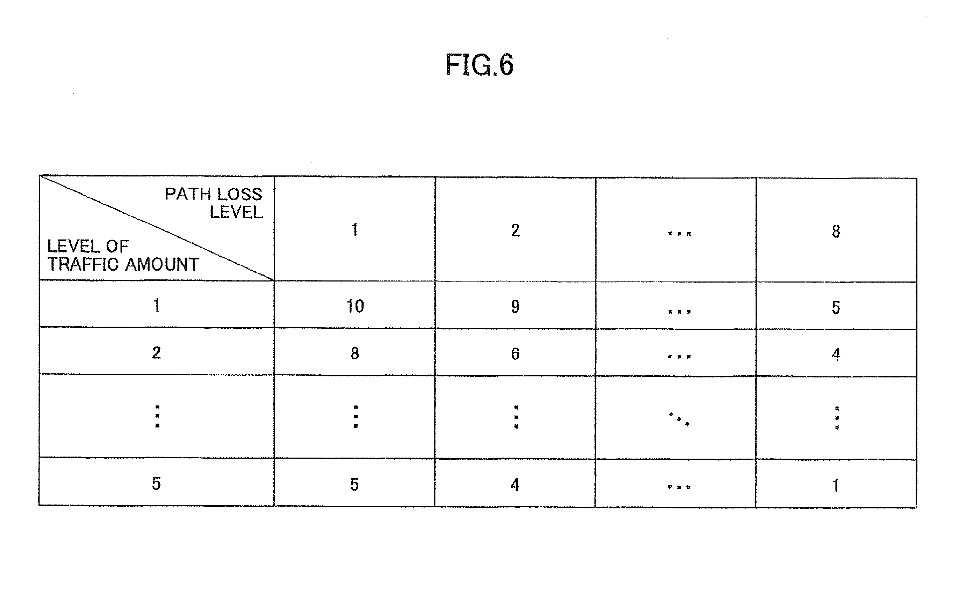

Fig. 6 shows a table for another radio parameter. This table is a table for deriving a radio parameter for TPC from a traffic amount and a level of path loss. In the figure, the "level of traffic amount" in the leftmost column indicates the same meaning as one described with reference to Fig. 4, and the size of the number corresponds to the size of the traffic amount or the size of the number of users. In the figure, the "path loss level" in the uppermost row indicates a value of path loss by which a cumulative distribution function (CDF) becomes 0.5. Generally, a small path loss value indicates that the difference between the transmission power and the received power is small, and corresponds to a case where the mobile station is near the base station. In this case, since the signal transmitted by the user apparatus exerts only small interference on other cells, the user apparatus is allowed to transmit signals with a relatively large power. Since signals are orthogonal with each other by FDM and TDM between a user and another user in the cell, the size of the transmission power does not largely affect interference to other users in the cell. On the other hand, a large path loss value indicates that the difference between the transmission power and the received power is large, and corresponds to a case where the user apparatus is located far from the base station (at a cell edge, for example). In this case, since the signals transmitted by the user apparatus may exerts large interference on other cells, the user apparatus should transmit signals with a relatively small power. A case where the value of path loss in CDF=0.5 is small corresponds to a case where users gather near the base station. On the other hand, a case where the value of path loss in CDF=0.5 is large corresponds to a case where the users are distributed far from the base station.

In view of these matters, as shown in the figure, the larger the path loss value is (as going to the right side), the smaller the value of the radio parameter becomes. For example, such relationship of the values can be represented as the following equation:

$$T_{SINR}(n) = T_{SINR0} - n \times \Delta T \quad [dB]$$

wherein n is a parameter indicating the size of the path loss, and $T_{SINR0}$ indicates a maximum transmission power that can be transmitted by a user apparatus near the base station, and $\Delta T$ indicates a predetermined radio parameter. Fig. 6 indicates how the value of $T_{SINP0}$ decreases according to the path loss level. Also, in the table shown in Fig. 6, the traffic amount is considered. That is, when the traffic amount is small (when the number of users is small), the value of $T_{SINR0}$ is changed such that signals are transmitted with a greater power than the case where the traffic amount is large (when the number of users is large).

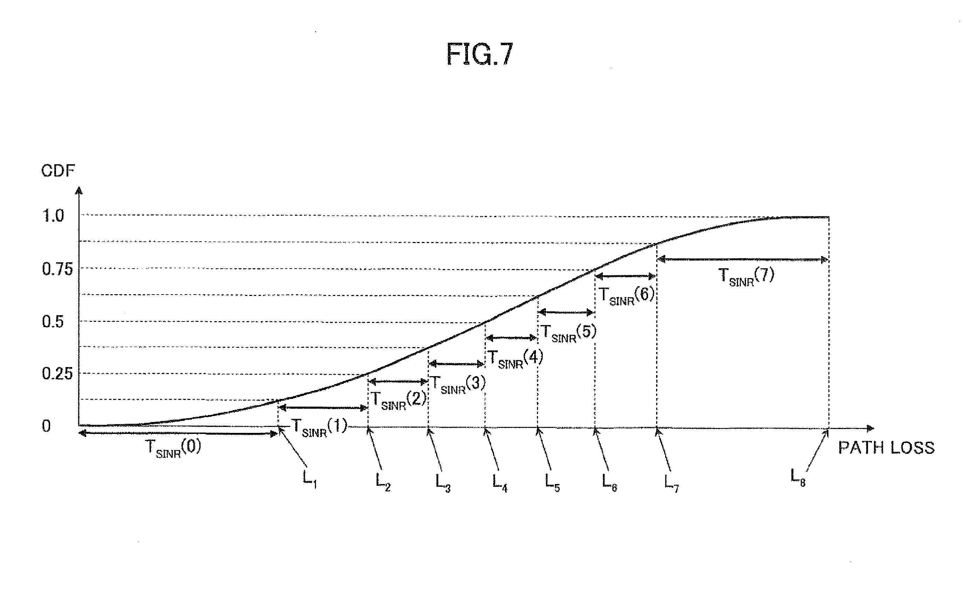

Fig. 7 shows an example in which the target value $T_{SINR}(n)$ for TPC is set to be different according to the value n of path loss. In the example shown in the figure, the distance from the base station is classified into groups such that the cumulative distribution of users in the cell changes at equal intervals of 0.125. For example, CDF = 0.5 ~ 0.625 corresponds to path loss of L4 ~ L5, and a user indicating path loss of this range should have $T_{SINR}(4)$ as a target value of the transmission power. As mentioned above, by using the transmission power target value $T_{SINR}(n)$ that is properly derived from the path loss level and the traffic amount, the transmission power suitable for the distribution state of users can be realised. Thus, it can be avoided to exert excessive interference on the cell and other cells, so that the technique can contribute to efficient use of radio resources and to improvement of throughout.

INDUSTRIAL APPLICABILITY

As mentioned above, although the LTE system (or Evolved UTRA system) has been described as a preferred embodiment, the present invention can be also applied to any proper system in which it is better to frequently update the radio parameters of the base station.

The present invention is described above by referring to a specific embodiment. However, a person skilled in the art may understand that the above embodiment is described for illustrative purpose only and may think of examples of various modifications, transformations, alterations, changes, and the like. To promote an understanding of the present invention, specific values are used as examples throughout the description. However, it should be noted that such specific values are just sample values unless otherwise described, and any other values may be used. It should be noted that division into several embodiments and items is not essential to the present invention. For example, two or more embodiments or items may be combined on an as-needed basis, and a matter described in an embodiment or an item may be applied to another embodiment or another item (unless contradictory). For illustrative purposes, the apparatus according to an embodiment of the present invention is described with reference to functional block diagrams. However, such an apparatus may be provided by hardware, software, or a combination thereof. The present invention is not limited to the embodiment described above, and various modifications, transformations, alteration, exchanges, and the like may be made without departing from the scope and spirit from the present invention.

The present international application claims priority based on Japanese patent application No.2007-286739, filed in the JPO on November 2, 2007 and the entire contents of the Japanese patent application No.2007-286739 are incorporated herein by reference.

**Claims**

1. A base station for use in a mobile communication system, comprising:

a measurement unit configured to measure one or more pieces of statistical data in the number of users in a cell, a user distribution state or a traffic amount; and

a deriving unit configured to derive a value of a radio parameter corresponding to currently measured statistical data from predetermined correspondence relationship between the statistical data and the radio parameter; wherein a value of the radio parameter set as office data in the base station is automatically updated to a value derived by the deriving unit.

2. The base station as claimed in claim 1, further comprising a storing unit configured to store a table representing the correspondence relationship.

3. The base station as claimed in claim 1, wherein the correspondence relationship represents relationship between statistical data that is the number of users and/or the traffic amount and a ratio of a physical uplink control channel (PUCCH) to a system band.

4. The base station as claimed in claim 1, wherein the distribution of users in the cell is divided based on values of path loss, and
the correspondence relationship represents relationship between a target power value of transmission power control for user apparatuses and
a value of path loss.

5. The base station as claimed in claim 4, wherein the target power values ($T_{SINR}(n)$) is represented as

$$T_{SINR}(n) = T_{SINR0} - n \times \Delta T_{SINR} \ [dB]$$

wherein n specifies a divided value of the path loss, and, $T_{SINR0}$ and $\Delta T_{SINR}$ represent radio parameters to be set as the office data.

6. The base station as claimed in claim 5, wherein the correspondence relationship represents relationship among $T_{SINR0}$, $T_{SINR}$ and traffic.

7. A method for use in a base station or a mobile communication system, comprising:

a measurement step of measuring one or more pieces of statistical data in the number of users in a cell, a user distribution state or a traffic amount;
a deriving step of deriving a value of a radio parameter corresponding to currently measured statistical data from predetermined correspondence relationship between the statistical data and the radio parameter; and
a step of updating a value of the radio parameter set as office data in the base station with a value derived by the deriving step.

# FIG.1

EP 2 217 021 A1

CORE NETWORK
400

ACCESS GATEWAY APPARATUS 300

MOBILE STATION 100₁

BASE STATION APPARATUS 200

MOBILE STATION 100₂

MOBILE STATION 100₃

CELL 50

# FIG.2

TO ACCESS GATEWAY APPARATUS

TRANSMISSION LINE INTERFACE — 212

BASEBAND SIGNAL PROCESSING UNIT — 208

TRANSMITTING AND RECEIVING UNIT — 206

AMPLIFYING UNIT — 204

TRAFFIC MEASUREMENT UNIT — 214

RADIO RESOURCE CONTROL UNIT — 210

200

202

EP 2 217 021 A1

# FIG.3

```
                                    ┌─ S11
        ┌──────────────────────────────────┐
        │        INITIAL SETTING           │
        └──────────────────────────────────┘
                        │
    ┌──────────────────►│         ┌─ S13
    │   ┌──────────────────────────────────┐
    │   │        MEASUREMENT               │
    │   └──────────────────────────────────┘
    │                   │         ┌─ S15
    │   ┌──────────────────────────────────┐
    │   │           DETERMINE              │
    │   │        OPTIMAL VALUE             │
    │   └──────────────────────────────────┘
    │                   │         ┌─ S17
    │   ┌──────────────────────────────────┐
    │   │           UPDATE                 │
    │   └──────────────────────────────────┘
    │                   │
    └───────────────────┘
```

# FIG.4

| LEVEL OF TRAFFIC AMOUNT | RATIO OF PUCCH |
|---|---|
| 1 | 10% |
| 2 | 20% |
| ⋮ | ⋮ |

FIG.5

<WHEN THE NUMBER OF USERS IS SMALL>

TIME

SYSTEM
BANDWIDTH

PUCCH

PUSCH

PUCCH

FREQUENCY

<WHEN THE NUMBER OF USERS IS LARGE>

TIME

PUCCH

PUSCH

PUCCH

FREQUENCY

# FIG.6

| | PATH LOSS LEVEL 1 | 2 | ... | 8 |
|---|---|---|---|---|
| LEVEL OF TRAFFIC AMOUNT | | | | |
| 1 | 10 | 9 | ... | 5 |
| 2 | 8 | 6 | ... | 4 |
| : | : | : | ... | : |
| 5 | 5 | 4 | ... | 1 |

EP 2 217 021 A1

# FIG.7

## INTERNATIONAL SEARCH REPORT

| International application No. |
|---|
| PCT/JP2008/069915 |

A. CLASSIFICATION OF SUBJECT MATTER
*H04W24/02*(2009.01)i, *H04J1/00*(2006.01)i, *H04J11/00*(2006.01)i, *H04W16/02* (2009.01)i, *H04W52/12*(2009.01)i, *H04W52/18*(2009.01)i

According to International Patent Classification (IPC) or to both national classification and IPC

B. FIELDS SEARCHED

Minimum documentation searched (classification system followed by classification symbols)
H04W24/02, H04J1/00, H04J11/00, H04W16/02, H04W52/12, H04W52/18

Documentation searched other than minimum documentation to the extent that such documents are included in the fields searched
Jitsuyo Shinan Koho          1922-1996   Jitsuyo Shinan Toroku Koho   1996-2009
Kokai Jitsuyo Shinan Koho   1971-2009   Toroku Jitsuyo Shinan Koho   1994-2009

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2006-211279 A (Sanyo Electric Co., Ltd.), 10 August, 2006 (10.08.06), Par. Nos. [0026], [0055] to [0084]; Fig. 8 (Family: none) | 1-3,7 |
| A | WO 95/19687 A1 (Nokia Telecommunications Oy), 20 July, 1995 (20.07.95), Page 1, lines 7 to 32; page 9, line 19 to page 13, line 13 & JP 9-507624 A          & US 5778318 A & EP 740891 A          & FI 940196 A & AU 1417795 A         & CN 1138938 A | 3 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 20 January, 2009 (20.01.09) | 27 January, 2009 (27.01.09) |

| Name and mailing address of the ISA/ | Authorized officer |
|---|---|
| Japanese Patent Office | |
| Facsimile No. | Telephone No. |

Form PCT/ISA/210 (second sheet) (April 2007)

**INTERNATIONAL SEARCH REPORT**

| International application No. |
| --- |
| PCT/JP2008/069915 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X | JP 2962509 B1  (YRP Mobile Telecommunications Key Technology Research Laboratories Co., Ltd.), 06 August, 1999 (06.08.99), Par. Nos. [0010] to [0027]; Fig. 2 (Family: none) | 1,2,4-7 |
| A | JP 11-150754 A  (YRP Mobile Telecommunications Key Technology Research Laboratories Co., Ltd.), 02 June, 1999 (02.06.99), Par. Nos. [0016] to [0027] & US 6385183 B1        & EP 856955 A2 | 4-6 |
| A | WO 2006/043588 A1  (Sharp Corp.), 27 April, 2006 (27.04.06), Par. Nos. [0212] to [0222] & US 2007/0291702 A1    & EP 1811689 A1 & CN 101076958 A | 4-6 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2007286739 A